# EUROPÄISCHE PATENTANMELDUNG

(11) **EP 0 672 889 A2**
(43) Veröffentlichungstag der Anmeldung: **20.09.1995**
(21) Anmeldenummer: 95103619.3
(22) Anmeldetag: 14.03.1995
(51) Int. Cl.: G01B 11/16

(54) **Verfahren zur Erfassung der Änderung des Radius eines Auslegers eines Kranes unter Last**

(30) Priorität: 17.03.1994 DE 4409153
(71) Anmelder: FAUN GmbH, D-91205 Lauf/Pegnitz (DE)
(72) Erfinder: Egloffstein, Gerhard, Dipl.-Ing. (FH), D-91245 Hüttenbach (DE); Grabe, Klaus-Peter, Dipl.-Ing., D-91207 Lauf a.d. Pegnitz (DE)
(74) Vertreter: Rau, Manfred, Dr. Dipl.-Ing.

(57) **Zusammenfassung**

Bei einem Verfahren zur Erfassung der Änderung des Radius des Auslegers (10') eines Kranes (28') unter Last werden an mehreren Stellen des Auslegers (10') Meßpunkte (42) festgelegt, deren Lage zum einen unter Leerlast und zum anderen unter einer Gewichts-Last am Lasthaken (23) gemessen wird.

## Beschreibung

Die Erfindung betrifft ein Verfahren zur Erfassung von Radius-Änderungen eines Auslegers eines Kranes unter einer durch ein an einem Lasthaken hängendes Gewicht gebildeten Last.

Für jeden Kran und zwar insbesondere Fahrzeugkran werden aufgrund der Auslegung auf Bauteilsicherheit und Standfestigkeit Traglasttabellen erstellt. Diese werden im Hinblick auf die Sicherheitsvorschriften eines Bestimmungslandes, in dem der Kran betrieben werden soll, und im Hinblick auf die Nenn-Belastbarkeit des Kranes angefertigt. Ein bestimmter Krantyp kann nach dem Anwendungszweck mit einer unterschiedlichen Ausrüstung, wie unterschiedlichen Gegengewichten, unterschiedlichen Hakenflaschen oder auch zusätzlichen Anbauteilen, wie eine Gitter-Spitze, eingesetzt werden. Damit trotz dieser unterschiedlichen Bedingungen der Kran mit maximaler Leistung, d.h. maximaler Last bei einem vorgegebenen Auslegerradius bzw. maximalem Auslegerradius bei einer vorgegebenen Last betrieben werden kann, werden zu den jeweiligen Ausrüstungszuständen entsprechende Traglasttabellen erstellt.

Der Kran ist mit einem Rechner ausgerüstet, in dem die gesamten Traglasttabellen des jeweiligen Typs gespeichert sind. In diesen Rechner werden auch während des Betriebes weitere Daten eingegeben, nämlich einerseits die Länge des Auslegers, der Druck im Wipp-Antrieb, der durch einen hydraulisch beaufschlagbaren Kolben-Zylindern-Antrieb gebildet ist, und der Auslegerwinkel gegenüber der Horizontalen. Während unter Radius des Krans der horizontale Abstand des freien Lasthakens von der Drehachse des Krans zu verstehen ist, ist die Länge des Auslegers bestimmt durch den Abstand der Auslegerspitze von dem Auslegerfußpunkt. Die erwähnten Traglasttabellen sind rechnerisch ermittelte Soll-Traglasten. Da die Fertigungstoleranzen des Auslegers und einzelner Kranteile, wie Wippantrieb, teleskopierbare oder zusätzlich angebaute Ausleger-Schüsse, Gegengewichte und dergleichen nur schwer zu erfassen sind, muß die tatsächliche Verformung des Auslegers unter Last erfaßt werden, wobei die Reibungsverhältnisse in dem durch einen hydraulisch beaufschlagbaren Kolben-Zylinder-Antrieb gebildeten Wipp-Antrieb ebenfalls eine Rolle spielen.

In der Praxis werden diese sich aus der Verformung des Auslegers unter Last ergebenden Änderungen des Radius des Auslegers mittels eines Maßbandes gemessen. Um die Verformung des Auslegers ausreichend genau zu erfassen, müssen Messungen mit 10 unterschiedlichen Gewichten durchgeführt werden. Der Zeitaufwand hierfür beträgt etwa 6 Manntage.

Der Erfindung liegt die Aufgabe zugrunde, ein Verfahren der eingangs angesprochenen Art zu schaffen, bei dem die Änderungen des Radius des Auslegers unter Last mit geringem Zeitaufwand und hoher Meßgenauigkeit erfaßt werden können.

Diese Aufgabe wird erfindungsgemäß durch die Merkmale im Anspruch 1 gelöst. Durch das erfindungsgemäße Verfahren wird die Meßgenauigkeit stark erhöht, da Paralaxenfehler, die beim Messen mit dem Maßband in erheblichem Maße auftreten können, vermieden werden. Es müssen nicht mehr Messungen mit vielen unterschiedlichen Gewichten durchgeführt werden, sondern im Grundsatz nur eine Messung ohne Gewichtslast am Lasthaken und eine Messung mit Gewichtslast am Haken. Dies ergibt sich daraus, daß die Biegeverformung des gesamten Auslegers, gegebenenfalls einschließlich des Kran-Untergestells, erfaßt wird.

Die Unteransprüche geben zum Teil erfinderische Einzelheiten und Weiterbildungen der Erfindung wieder.

Weitere Merkmale, Einzelheiten und Vorteile der Erfindung ergeben sich aus der nachfolgenden Beschreibung anhand der Zeichnung. Es zeigt
- Fig. 1: einen Kran mit einem Meß-Aufbau und
- Fig. 2: einen gegenüber Fig. 1 abgewandelten Kran in einer Verformung unter Leerlast und unter Gewichtslast.

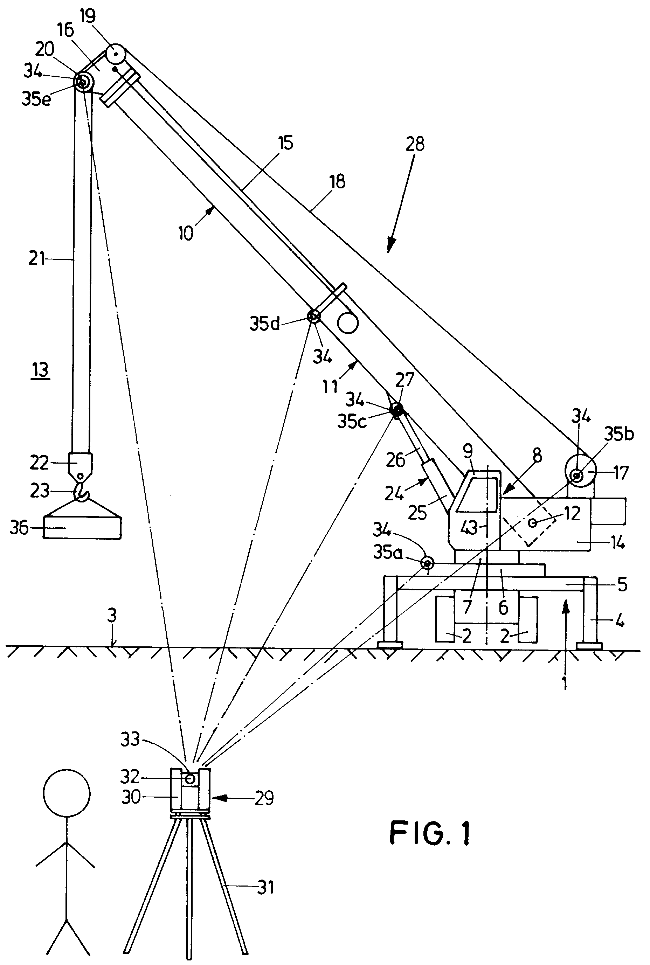

In Fig. 1 ist ein Kranfahrzeug schematisch dargestellt, das sich in Arbeitsposition befindet. Es weist einen Rahmen 1 auf, an dem Räder 2 angebracht sind, die bei Straßenfahrbetrieb auf dem Boden 3 aufstehen. Für den in der Zeichnung dargestellten Arbeitsbetrieb wird der Rahmen 1 über hydraulisch nach unten ausfahrbare Stützen 4 auf dem Boden 3 abgestützt, die wiederum an Abstützarmen 5 angebracht sind, die horizontal vom Rahmen 1 ausfahrbar oder ausschwenkbar sind. In dieser dargestellten Arbeitsstellung sind die Räder 2 gegenüber dem Boden 3 entlastet. Auf dem Rahmen 1 ist ein Kran-Untergestell 6 angebracht, auf dem über einen Drehkranz 7 in üblicher Weise ein Kran-Oberwagen 8 drehbar gelagert ist. Am Oberwagen 8 ist eine Bediener-Kabine 9 angebracht. Weiterhin ist am Oberwagen 8 ein Teleskop-Ausleger 10 angeordnet, dessen Grundausleger 11 um eine einen Auslegerfußpunkt bildende horizontale Achse 12 am Oberwagen 8 vertikal verschwenkbar gelagert ist. Auf der dem Arbeitsbereich 13 des Auslegers 10 abgewandten Seite des Oberwagens 8 ist ein Gegenausleger 14 für ein nicht dargestelltes Gegengewicht vorgesehen, das unterschiedlich schwer sein kann.

In dem in Fig. 1 dargestellten Ausführungsbeispiel weist der TeleskopAusleger 10 außer dem Grundausleger 11 einen teleskopartig aus dem Grundausleger 11 ausfahrbaren bzw. in diesen einfahrbaren Ausleger-Schuß 15 auf, der an seinen freien Enden einen Rollenkopf 16 trägt. Auf dem Gegenausleger 14 ist eine antreibbare Seilwinde 17 angebracht, von der ein Hubseil 18 zum Rollenkopf 16 geführt ist, wo es über eine Umlenkrolle 19 und einen Rollenblock 20 eines Seil-Flaschenzuges 21 zu einer Hakenflasche 22 des Flaschenzuges 21 geführt ist, die einen Lasthaken 23 trägt.

Beim Ausleger 10 handelt es sich um einen Wipp-Ausleger, der mittels eines Wipp-Antriebs 24 um die Achse 12 verschwenkbar ist. Der Wipp-Antrieb 24 ist in üblicher Weise durch einen hydraulisch beaufschlagbaren Kolben-Zylinder-Antrieb gebildet, dessen Zylinder 25 am Oberwagen 8 angelenkt ist, während seine Kolbenstange 26 mittels eines Schwenkgelenks 27 am Grundausleger 11 angebracht ist.

Die Durchbiegung des gesamten Kranes unter Last wird über eine Vielzahl von Einzel-Meßstellen erfaßt, wobei zwingende Randbedingung ist, daß - wie es auch für den Praxiseinsatz zwingend erforderlich ist - der Rahmen 1 mit dem Kran 28 absolut fest gegenüber dem Boden 3 abgestützt ist. Es wird an Meßstellen gemessen, die die Verformung des Rahmens 1 und des Auslegers 10 unter Last gut representieren. Zur Messung der Verformungen wird ein sogenanntes Tachymeter 29 eingesetzt, bei dem es sich um ein Gerät handelt, das auch zur Landvermessung eingesetzt wird. Mit ihm wird - ausgehend von einem vorher festgelegten Horizontal-Vertikal-Referenz-Koordinatensystem - die Lage von Punkten in diesem Koordinatensystem sehr exakt vermessen. Das Tachymeter 29 weist einen alle wichtigen Einrichtungen enthaltenen Arbeitskopf 30 auf, der über ein Fußgestell 31 gegenüber dem Boden 3 abgestützt ist. Der Arbeitskopf 30 weist eine Visieroptik 32 auf, mittels derer Punkte der Höhe und der Seite nach extrem exakt erfaßt werden können. Außerdem weist er einen Sender 33, beispielsweise einen Infratorsender oder einen Lasersender, auf, mittels dessen die Entfernung einer Meßstelle vom Tachymeter 29 exakt bestimmt werden kann.

Am Kran 28 werden an verschiedenen vorher festgelegten Meßstellen Reflektoren 34 in Form von Prismen angebracht, die einerseits einen Meßpunkt 35 aufweisen, dessen Lage der Höhe und der Seite nach durch die Visieroptik 32 exakt erfaßt werden kann. Die Reflektoren 34 selber dienen zur Reflektion der Strahlen des Senders 33 zur Festlegung der Entfernung des jeweiligen Meßpunktes 35 von dem Tachymeter 29.

Für die Lage der einzelnen Meßstellen gibt es keine zwingende Regel; ihre Läge soll die Verformung des Rahmens 1 und des Auslegers 10 bei Belastung gut repräsentieren, wie bereits oben angedeutet wurde.

Beispielsweise werden ein Meßpunkt 35a am Untergestell 6, ein Meßpunkt 35b an der Seilwinde 17 auf dem Gegenausleger 14, ein Meßpunkt 35c am durch das Schwenkgelenk 27 gebildeten Angriffspunkt des Wipp-Antriebs 24 am Grundausleger 11, ein Meßpunkt 35d am Ende des Grundauslegers 11 und ein Meßpunkt 35e am Rollenblock 20 des Rollenkopfes 16 festgelegt. Dort werden die erwähnten Reflektoren 34, die die Meßpunkte 35 aufweisen, befestigt.

Die Läge dieser Meßpunkte 35a bis 35e wird in unbelastetem Zustand des Kranes 28 gemessen, in der also der Kran 28 naturgemäß unter seinem gesamten Eigengewicht steht. Anschließend wird die Verformung des Rahmens 1 und des gesamten Krans 28 gemessen, nachdem ein Gewicht 36 an den Lasthaken 23 der Hakenflasche 22 gehängt und angehoben wurde.

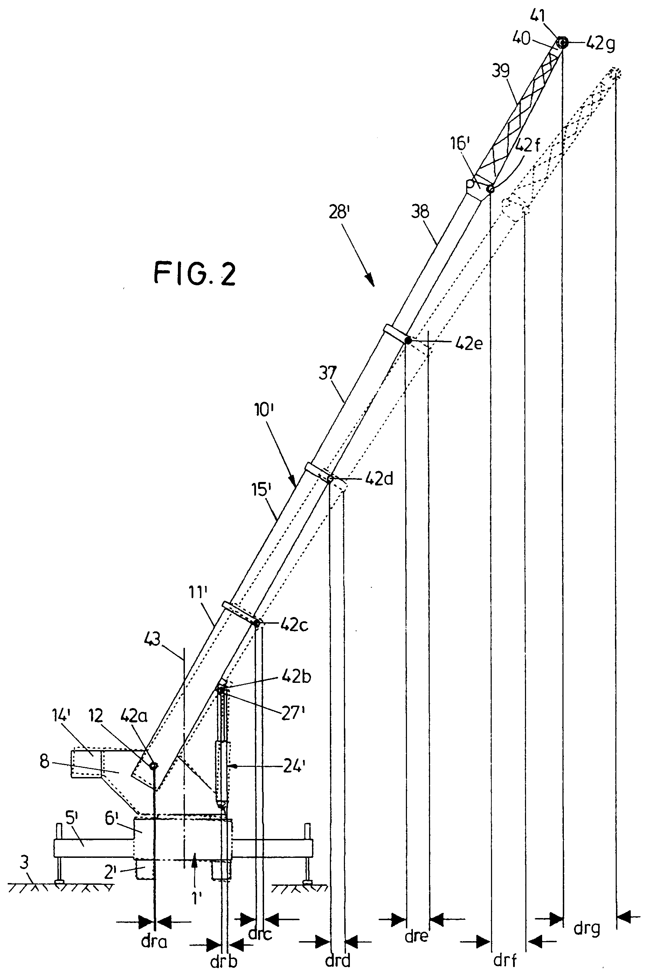

Die Verformung des Krans wird anhand von Fig. 2 näher erläutert, die einen Kran 28' zeigt, der stärker schematisiert dargestellt ist und sich von dem in Fig. 1 dargestellten Kran konstruktiv unterscheidet. Soweit einzelne Teile lediglich konstruktiv unterschiedlich, funktionell aber gleich sind, werden ohne erneute Beschreibung die gleichen Bezugsziffern wie in Fig. 1 allerdings mit einem hochgesetzten Strich verwendet.

Der Kran 28' weist außer dem Grundausleger 11' und einem teleskopierbaren Ausleger-Schuß 15' zwei weitere teleskopierbare Ausleger-Schüsse 37, 38 auf, wobei der letzte teleskopierbare Ausleger-Schuß 38 mit einem Rollenkopf 16' versehen ist. Zusätzlich kann an diesem Ausleger-Schuß 38 noch eine fachwerkartig ausgebildete Ausleger-Spitze 39 angebracht werden, mittels derer der maximale Auslegerradius noch einmal vergrößert werden kann. Auch diese Ausleger-Spitze 39 weist einen Rollenkopf 40 mit einem Rollenblock 41 auf. In diesem Fall sind verschiedene Meßpunkte vorgesehen und zwar wie folgt: Ein Meßpunkt 42a an dem durch die horizontale Achse 12 des Grundauslegers 11' gebildeten Auslegerfußpunkt, ein Meßpunkt 42b an dem durch das Schwenkgelenk 27' des Wipp-Antriebs 24' gebildeten Wipp-Antrieb-Anlenkpunkt, ein Meßpunkt 42c am Ende des Grundauslegers 11', ein Meßpunkt 42d am Ende des ersten teleskopierbaren Ausleger-Schusses 15', ein Meßpunkt 42e am Ende des zweiten teleskopierbaren Ausleger-Schusses 37, ein Meßpunkt 42f am Rollenkopf 40 des dritten teleskopierbaren Ausleger-Schusses 38 und ein Meßpunkt 42g am Rollenblock 41 der Ausleger-Spitze 39. Die Läge des Auslegers 10' ist in Fig. 2 ausgezogen dargestellt. Hierbei ist der Kran 28' und zwar insbesondere der Ausleger 10' nur durch sein Eigengewicht verformt. Die Läge des Auslegers 10' und des gesamten Kranes 28' unter Belastung, also in stark verformtem Zustand ist, in Fig. 2 gepunktet dargestellt. Hierbei ist auch das Auswandern der einzelnen Meßpunkte 42a bis 42g und damit die Veränderung dr des Radius der einzelnen Meßpunkte 42a bis 42g bezogen auf die Drehachse 43 des Kran-Oberwagens 8 eingezeichnet. Bei großen Kränen 28 bzw. 28' kann sich der Radius des äußersten Rollenblockes 41 bzw. 20 oder 20' zur Drehachse 43 um mehrere Meter aufgrund der Verformung des Krans 28, 28' unter Last verändern.

Da durch die Erfassung der Lageveränderung zahlreicher Meßpunkte 35 bzw. 42 unter einer Last für diesen Lastzutand im Vergleich zur Lage ohne Last eine sehr exakte Biegelinie des gesamten Kranes 28 bzw. 28' ermittelt wird, können Verformungszustände und damit die Lageveränderungen dr unter anderen Lasten sehr exakt berechnet werden. Damit sind die Radiusveränderungen unter Last, die für jeden Kran einer an sich identischen Bauausführung unterschiedlich sind, exakt erfaßbar. Diese ermittelten Radiusänderungen werden in einen bordeigenen Rechner eingegeben, mittels dessen jeweils die maximal zulässige Last bei einer bestimmten Ausladung d.h. bei einem bestimmten Radius des Auslegers 10 bzw. 10' oder umgekehrt ermittelt wird.

Die Ermittlung der Meßwerte erfolgt bei einer exakt vorgegebenen Winkelstellung des Auslegers 10, 10' gegenüber der Horizontalen unter Leerlast.

Um die vom Auslegerwinkel gegenüber der Horizontalen abhängigen Reibungskräfte im Wipp-Antrieb 24, 24' erfassen zu können, kann es zweckmäßig sein, die erwähnten Messungen bei unterschiedlichen Auslegerwinkeln gegenüber der Horizontalen durchzuführen.

## Patentansprüche

1. Verfahren zur Erfassung von Radius-Änderungen eines Auslegers eines Kranes unter einer durch ein an einem Lasthaken (23), hängendes Gewicht (36) gebildeten Last, wobei
- an mehreren Stellen des Auslegers (10, 10') Meßpunkte (35, 42) festgelegt werden,
- die Lage der Meßpunkte (35, 42) unter einer Last und
- die Lage bzw. die Lageänderung der Meßpunkte (35, 42) unter einer anderen Last gemessen wird.

2. Verfahren nach Anspruch 1, wobei eine Last durch den Kran (28, 28') ohne Gewicht (36) am Lasthaken (23) gebildet ist.

3. Verfahren nach Anspruch 1 oder 2, wobei Meßpunkte im Fußbereich des Auslegers (10, 10'), in seinem mittleren Bereich und im Bereich seines freien Endes angeordnet werden.

4. Verfahren nach einem der Ansprüche 1 bis 3, wobei ein Meßpunkt (35c, 42b) am Anlenkpunkt eines Wipp-Antriebs (24, 24') am Ausleger (10, 10') angeordnet wird.

5. Verfahren nach einem der Ansprüche 1 bis 4, wobei Meßpunkte (35d, 35e; 42c, 42d, 42e, 42f, 42g) im Bereich des jeweiligen freien Endes von Ausleger-Teilen angeordnet werden.

6. Verfahren nach einem der Ansprüche 1 bis 5, wobei eine Meßpunkt (35b) an einem Gegenausleger (14) des Kranes (28) angeordnet wird.

7. Verfahren nach einem der Ansprüche 1 bis 6, wobei ein Meßpunkt (35a) an einem Untergestell (6) des Krans (28) angeordnet wird.

8. Verfahren nach einem der Ansprüche 1 bis 7, wobei die Lage der Meßpunkte (35, 42) bzw. ihre Lageänderung in einem Koordinatensystem ermittelt werden.

9. Verfahren nach einem der Ansprüche 1 bis 8, wobei die Lage bzw. Lageänderung der Meßpunkte (35, 42) mittels eines ortsfesten Tachymeters (29) gemessen werden.

10. Verfahren nach einem der Ansprüche 1 bis 9, wobei an den Meßpunkten (35, 42) Reflektoren (34) angeordnet werden.
